# EUROPEAN PATENT SPECIFICATION

(11) **EP 0 832 810 B1**
(45) Date of publication and mention of the grant of the patent: **09.06.1999**
(21) Application number: 96830487.3
(22) Date of filing: 30.09.1996
(51) Int. Cl.: B62J 1/00, B62J 1/16

(54) **Support and connection device for bicycle baby-seats**
Halter und Verbindungsvorrichtung für Fahrradkindersitze
Support et dispositif de connection pour sièges de bébé pour bicyclette

(43) Date of publication of application: 01.04.1998
(73) Proprietor: STAMP S.r.l., I-24060 Telgate (Bergamo) (IT)
(72) Inventor: Erli, Pier Angelo, 24060 Telgate, Bergamo (IT)
(74) Representative: Righetti, Giuseppe

(56) References cited:
- EP-A- 0 669 247
- US-A- 5 529 325

## Description

The present invention relates to a support and connection device for bicycle baby-seats.

The invention is particularly adapted for use when the seats are disposed at the rear behind the bicycle rider although by simple modifications falling within the invention scope, it will also apply to the support of front seats.

It is known that bicycle baby-seats are to be fastened by appropriate connection means to the bicycle itself.

According to a first known technique, the seat is directly secured to a normal back parcel-rack with which the bicycle is already equipped. While this known technique is very cheap, it has some serious drawbacks. Actually, first of all, since the baby's and seat's load is borne by the parcel-rack, the centre of gravity of the whole weight resting on the bicycle is moved backwardly too much, thereby reducing steadiness and easy steerability of said bicycle.

In addition, the seat fixedly fastened to the parcel-rack, is detrimental to babies' health and comfort, because it is unable to absorb the road surface asperities that are likely to cause strong shocks and stresses above all to the baby back.

There is also another known technique consisting in no longer fixing the seat to the parcel-rack, but in fixedly fastening it, by means of a supporting structure, directly to the bicycle frame, at two points, the first point consisting of the upper area of the rear side tubes, or seat stay, carrying out connection between the frame area under the saddle and the hub, and the second point consisting of the rear wheel hub or the frame areas immediately close to said hub. This technique however involves a complete stiffness in the seat support and therefore causes the above mentioned problems, in terms of health and comfort.

In order to overcome the above drawbacks, the use of seats each provided with a supporting arm of elongated conformation capable of giving the seat a fair springiness and, as a result, of better taking up the road surface asperities is also known.

In such seats, the elongated supporting arm is generally made up of two flexible steel elements connected at the end to a single solid, and therefore bulky, attachment block fastened to the bicycle frame usually at the seat post.

While this known technical solution briefly described above enables a fair comfort together with an optimal steerability of the bicycle, since it lowers the centre of gravity of the overall load to an area under the rider, thereby improving the rider's balance control, it however has the serious drawback of being inadapted for application to all bicycles, which greatly restricts a possible spread of same.

Finally, since the attachment block of the elongated arm is the only point for fastening of the seat to the bicycle frame, it necessarily has a solid and bulky structure which is not compatible with some frame types above all when they are not of the traditional type as in the case of "mountain bikes".

In addition, in many frames, several different connection pieces are already present on the seat post, for a tyre-pump, a water-bottle and other accessories for example, so that said frame portion is encumbered with them and therefore it is practically impossible to have a sufficiently wide available portion adapted to receive the attachment block for the seat.

It is also to note that, since connection to the frame substantially takes place at a single point and since the load is very far from said connection point, many problems may arise in terms of reliability to fatigue, which would bring about obvious risks in case of yielding of the only connection point.

It is also known from document US 5529325 an auxiliary seat adapted to be mounted over the wheel of a bicycle. The seat includes a shock absorbing support assembly capable of damping the vibrations transmitted to the seat from the bicycle. The support assembly is connected to the framework of the bicycle by means of attachment blocks which connect a first end of the support assembly close to the saddle of the bicycle and the second end in a position which is over and backward with respect to the wheel axle. The position of the spring defining the shock absorbing element may be fixed at various locations thereby varying the bias of the compression spring and therefore compensating the shock absorbying capacity of the assembly.

Under this situation, the technical task underlying the present invention is to provide a support and connection device for bicycle baby-seats capable of substantially obviating the above described drawbacks.

Within the scope of this technical task it is an important aim of the invention to provide a support and connection device for bicycle baby-seats capable both of ensuring an appropriate comfort to the child sitting in the seat, and of being applied without difficulty to all types of bicycle frames, even when other connection pieces for a tyre-pump and other accessories have already been applied to said frames.

The technical task mentioned and the aim specified are substantially achieved by a support and connection device for bicycle baby-seats according to the claims.

The description of some preferred embodiments of a support and connection device for bicycle baby-seats in accordance with the present invention is now given hereinafter by way of non-limiting example, with reference to the accompanying drawings, in which:
- Fig. 1 shows a first embodiment of a support and connection device applied to a bicycle; and
- Fig. 2 shows a second embodiment of the same device.

With reference to the drawings, the support and connection device for bicycle baby-seats in accordance with the invention has been generally identified by reference numeral 1.

It comprises a supporting structure 2 for a seat 3 of a type intended for direct engagement with the frame 4 of a bicycle 5, fastening to possibly present parcel-racks being avoided.

The supporting structure 2 comprises at least one spring element 6 adapted to define an elastic suspension for the seat 3. In an original manner, this supporting structure can be engaged to the frame 4 by at least two attachment blocks 7 to be fastened to the frame 4 at spaced apart points thereof.

More particularly, the attachment blocks 7 are comprised of at least one first attachment block 7a adapted to be fastened to a frame area of the bicycle close to the saddle and at least one second attachment block 7b adapted to be fastened to the bicycle frame close to the rear wheel hub.

In addition to the spring element 6, the supporting structure 2 comprises at least one substantially stiff rest element 8 which engages the seat 3 and is articulated at the end on the first attachment block 7a.

The spring element 6 has one end 6a in engagement with the seat 3 too and a second end 6b connected to the second attachment block 7b. Practically, the frame portion 4 included between the first and second attachment blocks 7a and 7b, the stiff rest element 8 and the spring element 6, defines a triangular structure having one side corresponding to the spring element 6 of variable length which enables the rest element to oscillate about the first attachment block 7a so as to take up shocks having a tendency to be transmitted to the seat when the bicycle wheels run on uneven road surfaces or encounter raised or lowered portions such as pavements.

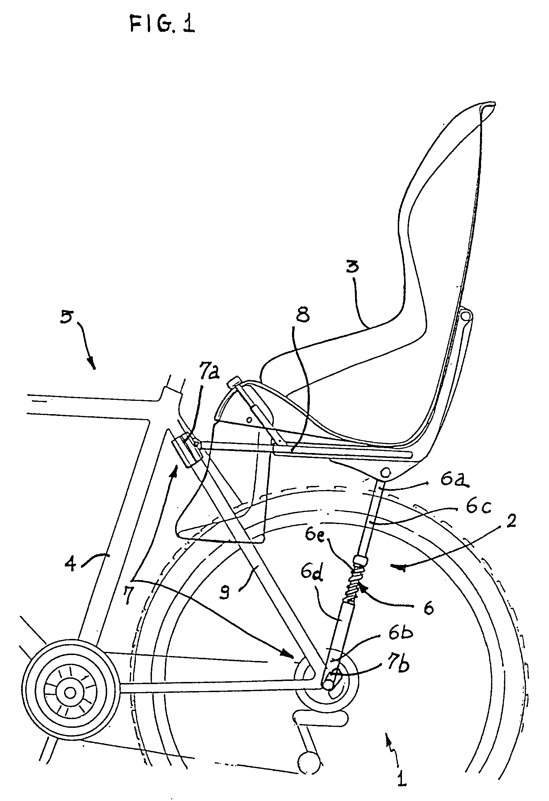

In a first embodiment (see Fig. 1), the spring element 6 is comprised of two rods 6c and 6d telescopically sliding into each other, and a compression spring 6a interposed between the rods 6c and 6d.

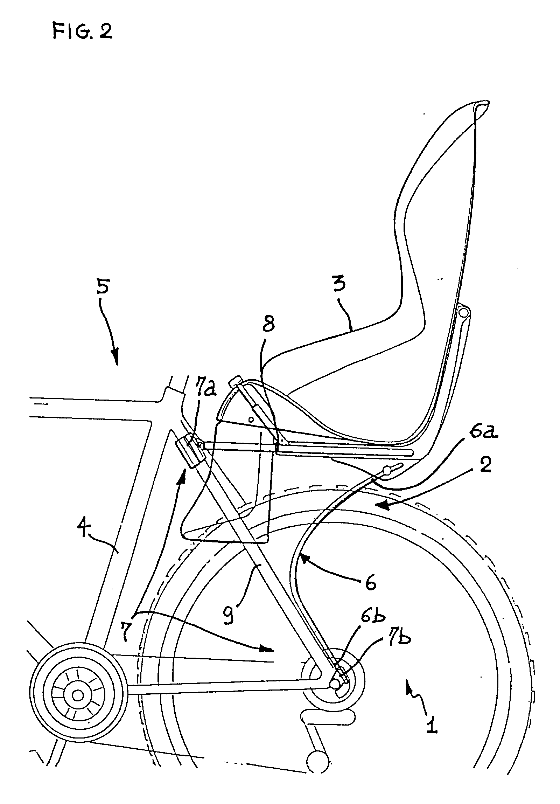

In a second embodiment (see Fig. 2), the spring element 6 is defined by a single curved element made of a flexible material, spring steel for example.

Alternatively, the spring element 6 may be embodied by any technique performing the function of an elastic suspension, a spring provided with a shock absorber or an air spring for example.

Advantageously, both in the first and in the second embodiment of the above mentioned supporting structure 2 provision is made for two stiff rest element 8 disposed side by side and two flexible elements 6 disposed on either side of the rear wheel.

The two stiff elements 8 are connected to a pair of first attachment blocks 7a each adapted to be fastened to an upper portion of the bicycle seat stay 9, i.e. the two frame tubes diverging towards the rear wheel hub (see Figs. 1 and 2), or they can be articulated on a first attachment block (not shown in the figures) adapted to be fastened to the support and adjustment post integral with the saddle.

The two flexible elements 6 terminate with their second ends 6b at a pair of second attachment blocks 7b adapted to be directly fastened to the rear wheel hub (see Figs. 1 and 2).

The invention achieves important advantages.

It is to point out first of all that the use of at least two attachment blocks for the supporting structure, to be fastened to spaced apart areas of a bicycle frame enables the mechanical-strength requirements of said blocks to be restricted and, as a result, bulkiness of same to be reduced, since the seat load weighing on the frame can be distributed among several points, instead of resting on a single point. The reduced sizes of the attachment blocks and the limited loads to which they are subjected therefore facilitate fastening of some also to frame areas of lower section, such as the bicycle seat stay, which usually are free from connection pieces for other accessories and which on the other hand are present in every bicycle. As a result, the device of the invention has features of maximum versatility facilitating application of same to all bicycle types.

In addition, provision of several attachment points obviously ensures operation in almost absolute safety.

It will be finally recognized that the support and connection device enables baby-seats to achieve a greater springiness, to such an extent that it constitutes a true elastic suspension for the children sitting in them, which is capable of taking up (and also damping, if a shock absorber is provided) any shock transmitted from the frame, thus avoiding damages to the back of the carried children.

## Claims

1. A support and connection device for bicycle baby-seats, of the type comprising:
- a supporting structure (2) for a seat (3) to be directly fastened to the frame (4) of a bicycle (5), said supporting structure (2) comprising at least one spring element (6) adapted to define an elastic suspension for said seat; and
- at least two attachment blocks (7) for said supporting structure to be fixed to spaced apart points of said frame, said attachment blocks (7) comprising at least one first attachment block (7a) adapted to be fastened to the frame (4) close to the bicycle saddle and at least one second attachment block (7b), characterized in that said second attachment block (7b) is adapted to be directly fastened to the rear wheel hub of the bicycle.

2. A device according to claim 1, characterized in that said supporting structure (2) comprises at least one substantially stiff rest element (8) which engages said seat (3) and is articulated at the end on said first attachment block (7a), and in that said spring element (6) has one end (6a) directly or indirectly connected to said seat (3) and a second end in engagement with said attachment block (7b).

3. A device according to claim 2, characterized in that said spring element (6) is comprised of two rods (6c, 6d) telescopically sliding into each other and a compression spring (6e) interposed between said rods.

4. A device according to claim 2, characterized in that said spring element (6) is defined by a single curved element made of a flexible material.

5. A device according to claim 2, characterized in that two of said first attachment blocks (7a) each adapted to be fastened to an upper portion of the bicycle seat stay (9) are provided, as well as two of said stiff rest elements (8).

6. A device according to claim 1, characterized in that said first attachment block (7a) is adapted to be fastened to a support and adjustment post for the saddle or to a saddle-supporting tube.

7. A device according to claim 2, characterized in that two of said second attachment blocks (7b), adapted to be directly fastened to the rear wheel hub are provided, as well as two of said spring elements (6).

## Patentansprüche

1. Vorrichtung zum Haltern und Anbringen von Fahrradkindersitzen, noch der Art umfassend:
- einen Tragaufbau (2) eines unmittelbar am Rahmen (4) eines Fahrrades (5) zu befestigenden Sitzes (3), wobei der Tragaufbau (2) mindestens ein Federelement (6) umfaßt, das eine elastische Aufhängung für den Kindersitz festlegt; und
- mindestens zwei Anschlußblöcke (7) für den Tragaufbau, die an voneinander beabstandeten Stellen des Rahmens befestigbar sind, wobei die Anschlußblöcke (7) mindestens einen ersten Anschlußblock (7a), der am Rahmen (4) in der Nähe des Fahrradsitzes befestigt wird, und mindestens einen zweiten Anschlußblock (7b) umfassen,
dadurch gekennzeichnet, daß der zweite Anschlußblock (7b) geeignet ist, unmittelbar an der Nabe des Fahrradhinterrades befestigt zu werden.

2. Vorrichtung nach Anspruch 1, dadurch gekennzeichnet, daß der Tragaufbau (2) mindestens ein im wesentlichen starres Tragelement (8) umfaßt, das den Kindersitz (3) ergreift und endseitig an dem ersten Anschlußblock (7a) angelenkt ist, und dadurch, daß das Federelement (6) ein erstes Ende (6a), das mittelbar oder unmittelbar mit dem Kindersitz (3) verbunden ist, und ein zweites Ende aufweist, das am Anschlußblock (7b) in Eingriff steht.

3. Vorrichtung nach Anspruch 2, dadurch gekennzeichnet, daß das Federelement (6) zwei Stangen (6c, 6d), die teleskopartig zueinander verstellbar sind, und eine Druckfeder (6a) umfaßt, die zwischen diesen Stangen liegt.

4. Vorrichtung nach Anspruch 2, dadurch gekennzeichnet, daß das Federelement (6) durch ein einziges Bogenelement festgelegt ist, das aus einem biegsamen Material besteht.

5. Vorrichtung nach Anspruch 2, dadurch gekennzeichnet, daß zwei von ersten Anschlußblöcken (7a), die jeweils an einem oberen Abschnitt der hinteren Gabel (9) des Fahrrades befestigt werden können, und zwei der starren Tragelemente (8) vorgesehen sind.

6. Vorrichtung nach Anspruch 1, dadurch gekennzeichnet, daß der erste Anschlußblock (7a) an einem Stütz- und Stellrohr des Sitzes oder am Tragrohr des Sitzes selbst befestigt werden kann.

7. Vorrichtung nach Anspruch 2, dadurch gekennzeichnet, daß zwei der zweiten Anschlußblöcke (7b), die unmittelbar an der Nabe des Hinterrades befestigt werden können, sowie zwei der Federelemente (6) vorgesehen sind.

## Revendications

1. Dispositif de support et de connexion pour sièges de bébé pour bicyclette, du type comprenant:
- une structure support (2) pour un siège (3) à fixer directement au cadre (4) d'une bicyclette (5), ladite structure support (2) comprenant au moins un élément élastique (6) destiné à définir une suspension élastique pour ledit siège; et
- au moins deux blocs d'attache (7) pour ladite structure support à fixer à des points dudit cadre écartés l'un de l'autre, lesdits blocs d'attache (7) comprenant au moins un premier bloc d'attache (7a) destiné à être fixé au cadre (4) à proximité de la selle de la bicyclette et au moins un deuxième bloc d'attache (7b),
caractérisé en ce que ledit deuxième bloc d'attache (7b) est destiné à être fixé directement au moyeu de la roue arrière de la bicyclette.

2. Dispositif selon la revendication 1, caractérisé en ce que ladite structure support (2) comporte au moins un élément d'appui sensiblement rigide (8) engageant ledit siège (3) et articulé à l'une de ses extrémités sur ledit premier bloc d'attache (7a), et en ce que ledit élément élastique (6) a une (6a) de ses extrémités reliée directement ou indirectement audit siège (3) et sa seconde extrémité en engagement avec ledit bloc d'attache (7b).

3. Dispositif selon la revendication 2, caractérisé en ce que ledit élément élastique (6) comporte deux tiges (6c, 6d) coulissant l'une dans l'autre de manière télescopique et un ressort de compression (6e) interposé entre lesdites tiges.

4. Dispositif selon la revendication 2, caractérisé en ce que ledit élément élastique (6) est défini par un seul élément arqué réalisé en matériau flexible.

5. Dispositif selon la revendication 2, caractérisé en ce qu'on prévoit deux desdits premiers blocs d'attache (7a), chacun destiné à être fixé à une portion supérieure de la fourche arrière (9) de la bicyclette, et également deux desdits éléments d'appui rigides (8).

6. Dispositif selon la revendication 1, caractérisé en ce que ledit premier bloc d'attache (7a) est destiné à être fixé à un tube de support et réglage de la selle ou à un tube porte-selle.

7. Dispositif selon la revendication 2, caractérisé en ce que qu'on prévoit deux desdits deuxièmes blocs d'attache (7b), destinés à être fixés directement au moyeu de la roue arrière, et également deux desdits éléments élastiques (6).
